# EUROPEAN PATENT SPECIFICATION

(11) **EP 4 689 781 B1**
(45) Date of publication and mention of the grant of the patent: **12.08.2026**
(21) Application number: 24773385.0
(22) Date of filing: 17.09.2024
(51) Int. Cl.: G02C 13/00, G01L 5/00

(54) **DEVICE AND METHOD FOR DETERMINING A CONTACT PRESSURE DURING A CLEANING PROCESS FOR A SPECTACLE LENS DUMMY**
VORRICHTUNG UND VERFAHREN ZUR BESTIMMUNG EINES ANPRESSDRUCKS BEI EINEM REINIGUNGSVORGANG FÜR EIN DUMMY BRILLENGLAS
DISPOSITIF ET PROCÉDÉ DE DÉTERMINATION D'UNE PRESSION DE CONTACT PENDANT UN PROCESSUS DE NETTOYAGE POUR UN VERRE DE LUNETTES DE DÉMO

(30) Priority: 20.09.2023 DE 102023125475
(43) Date of publication of application: 11.02.2026
(73) Proprietor: Carl Zeiss Vision International GmbH, 73430 Aalen (DE)
(72) Inventor: CHRISTMANN, Michel-Rene, 73430 Aalen (DE); PUPO, Ibro, 73430 Aalen (DE); BINDER, Niklas, 73430 Aalen (DE); DANGELMAIER, Andreas, 73430 Aalen (DE); HORNAUER, Matthias, 73430 Aalen (DE)
(74) Representative: Pearl Cohen EU
(86) International application number: PCT/EP2024/075950
(87) International publication number: WO 2025/061691

(56) References cited:
- CN-U- 207 803 680
- CN-U- 208 314 371
- JP-A- 2009 072 894

## Description

The present disclosure relates to a device and a method for determining a contact pressure during a cleaning process for a spectacle lens dummy. The disclosure is thus in the field of the development of spectacle lenses.

For cleaning spectacle lenses, the prior art discloses various aids which spectacle wearers can make use of depending on their preferences and depending on the kind of soiling. Many aids for cleaning a spectacle lens necessitate applying mechanical pressure to the spectacle lens in order to press the aid against the spectacle lens and to detach any soiling adhering to the spectacle lens by means of the aid. By way of example, dry cleaning cloths, such as a microfibre cloth, for instance, and/or moist spectacle cleaning cloths can be used as aids for cleaning a spectacle lens. The magnitude of the typically applied pressure and the magnitude of the pressure to be applied for a cleaning process for a spectacle lens using a specific aid are typically beyond the knowledge of the spectacle wearer and also the manufacturer of the spectacle lens. This may have the effect that spectacle wearers apply an excessive contact pressure for the cleaning of a spectacle lens and thereby subject the spectacle lens to unnecessary loading, even if this need not be necessary for the cleaning.

DE 20 2017 006 108 U1 describes a wet and dry cleaner for spectacles, which is used to clean the loose and also firmly adhering impurities from the spectacle lenses. To protect the spectacle lens from damage when cleaning with such a spectacle cleaner and an associated cleaning method, the spectacle cleaner is designed to clean the spectacle lenses wet and dry. Due to the design, the lenses can be cleaned from both sides at the same time. The ball bearings of the carrying parts allow them to adapt to the shape of the glasses.

CN208314371A describes a corneal reshaping lens cleaning tool, which is equipped with a cleaning container and a pressure sensor arranged in the cleaning container.

Accordingly, the object consists in providing a method and a device which are suitable for enhancing the prior art. Optionally, the object consists in providing a method and a device which are suitable for obtaining information about cleaning processes and aids for the cleaning of spectacle lenses.

The object is achieved by a device and a method having the features of the respective independent claim. Optional developments and optional features are specified in the dependent claims.

A device for determining a contact pressure during a cleaning process for a spectacle lens dummy is provided. The device comprises a spectacle lens dummy and a pressure sensor arranged on and/or in the spectacle lens dummy and designed to detect a contact pressure applied to the spectacle lens dummy during a cleaning process for the spectacle lens dummy and to provide information depending on the detected contact pressure.

Furthermore, a method for determining a contact pressure during a cleaning process for a spectacle lens dummy is provided. The method comprises providing a spectacle lens dummy having a pressure sensor arranged on and/or in the spectacle lens dummy, and carrying out, by means of a user, a cleaning process for the spectacle lens dummy by way of applying a contact pressure to the spectacle lens dummy. Furthermore, the method comprises detecting, by means of the pressure sensor, the contact pressure applied to the spectacle lens dummy during the cleaning process for the spectacle lens dummy, and providing information depending on the detected contact pressure by means of the pressure sensor.

In this case, a cleaning process can be a process which is typically used to clean a spectacle lens, i.e. which is typically used to remove dirt from a spectacle lens. In this case, the cleaning process can be configured in such a way that it is suitable for the cleaning of a spectacle lens arranged in a spectacle frame. In this case, the cleaning process can be able to be carried out with the assistance of an aid.

In this case, the contact pressure is a mechanical pressure which is applied to one or more optical surfaces of a spectacle lens during the cleaning process. The optical surfaces can be a front side and/or a rear side of the spectacle lens. In this case, the rear side can constitute that optical surface which faces the spectacle wearer's eye when the spectacle lens is worn as intended in a spectacle frame. In this case, the contact pressure can be applied to one of the optical surfaces and/or can be simultaneously applied to both optical surfaces, such that the spectacle lens is compressed by contact pressure from both sides. In this case, the contact pressure can serve to press an aid, such as a cleaning cloth, for instance, against the respective surface of the spectacle lens in order thus to detach dirt from the spectacle lens.

In this case, the fact that the contact pressure prevailing during a cleaning process for a spectacle lens is intended to be determined does not necessarily mean that the contact pressure is ascertained on the same spectacle lens. Rather, this can be effected by detecting the contact pressure in a representative manner on a spectacle lens dummy while the spectacle lens dummy is subjected to a cleaning process typically used to clean spectacle lenses. In other words, the contact pressure can be ascertained using a spectacle lens dummy in order to obtain information about a contact pressure typically prevailing during the cleaning of spectacle lenses.

In this case, a spectacle lens dummy can correspond to an object which, with regard to its constitution, is similar to a spectacle lens or is identical to a spectacle lens and which enables the pressure sensor to be fitted and which can be cleaned in a manner identical or similar to a spectacle lens. In particular, the spectacle lens dummy can be configured to be cleaned using the aids and/or movements that are typical of a cleaning process for a spectacle lens. The spectacle lens dummy can optionally deviate from an actual spectacle lens with regard to the optical properties. Optionally, the spectacle lens dummy can deviate from a spectacle lens with regard to its transparency. In this regard, optionally the transparency of the spectacle lens dummy can be restricted optionally by the pressure sensor which can be arranged optionally in areal fashion on and/or in the spectacle lens dummy. Optionally, the spectacle lens dummy can be configured in such a way that it is not arrangeable in a spectacle frame. Optionally, in order to provide an interface between the pressure sensor and a control device, one or more cables can protrude from the spectacle lens dummy, and may be an obstacle to arranging the spectacle lens dummy in a spectacle frame. Optionally, the spectacle lens dummy can be a spectacle lens, that is to say that optionally there is no difference between the spectacle lens dummy and a spectacle lens. Optionally, in this case, the spectacle lens can have one or more coatings suitable for the purpose in accordance with the disclosure. Optionally, the spectacle lens can be arranged in a (regular) spectacle frame. In other words, optionally a regular spectacle lens can be used as a spectacle lens dummy.

In this case, a pressure sensor is a sensor which provides sensor data depending on a pressure applied to the pressure sensor. The sensor data can optionally be provided in the form of a voltage signal, wherein optionally an amplitude of the voltage signal can be proportional to the applied pressure. In this case, the pressure sensor can be configured and/or arranged in and/or on the spectacle lens dummy in such a way that a contact pressure applied to the spectacle lens dummy corresponds to a pressure applied to the pressure sensor, or that a contact pressure applied to the spectacle lens dummy can be ascertained from the pressure applied to the pressure sensor. Optionally, the pressure applied to the pressure sensor can be proportional to the contact pressure applied to the spectacle lens dummy.

In this case, the disclosure affords the advantage that it makes it possible to obtain information about forces occurring or a contact pressure occurring during a regular cleaning process for a spectacle lens. In this regard, the disclosure can afford the advantage that spectacle lenses can be optimized with respect to the expected force effects on the spectacle lens. This can optionally afford the advantage that coatings can be adapted to the expected forces and pressures and, accordingly, the longevity of spectacle lenses can be increased and/or a cost optimization can be achieved with regard to the coatings to be applied.

In addition, the disclosure affords the advantage that aids for a cleaning process, such as, for instance, various kinds of cleaning cloths, and/or cleaning fluids can be investigated and/or compared with regard to the required contact pressure for detaching dirt from the spectacle lens. This can enable an optimization and/or improvement of aids.

In addition, the disclosure can afford the advantage that spectacle wearers and/or users of aids for cleaning spectacle lenses can be trained in order to enable them to clean spectacle lenses more efficiently and/or more gently. In this regard, the disclosure can afford the advantage that a user can recognize a sufficient measure for the pressure to be applied for cleaning a spectacle lens and can take it into account when cleaning spectacle lenses.

The pressure sensor can be embodied in areal fashion and occupy at least 25% and optionally at least 50% of the area of the spectacle lens dummy. This means that the pressure sensor can be configured not (just) to detect a prevailing pressure at points, but rather to detect the applied pressure over a relatively large area of at least 25% of the area of the spectacle lens dummy. Optionally, the pressure sensor can be designed to ascertain a pressure distribution over the area in which the pressure sensor can measure the pressure. This can make it possible to check the area portions of the spectacle lens dummy to which pressure is applied during the cleaning process and the regions to which, if appropriate, no pressure is applied. Alternatively or additionally, this can make it possible to identify regions in which a particularly high pressure is applied, so-called hotspots, and which may accordingly be subjected to particularly high mechanical loadings.

The pressure sensor can comprise or be embodied as a pressure measuring film. This can afford the advantage that an areal pressure sensor can be provided in a cost-effective manner. In addition, this can afford the advantage that the pressure sensor can be arranged on one or more surfaces of the spectacle lens in a simple manner. Optionally, the pressure measuring film can be provided in the form of a lacquer which can be applied to the spectacle lens dummy.

The pressure measuring film can be designed to change colour reversibly or irreversibly upon pressure being applied. This can afford the advantage that electrical and/or electronic detection of measured values by the pressure sensor need not be necessary and, accordingly, a control device for reading out the sensor data provided by the pressure sensor need not be necessary either. In addition, this can afford the advantage that the pressure sensor can be provided in a particularly cost-effective manner.

The pressure sensor can comprise or be embodied as a functional coating arranged on the spectacle lens dummy. Optionally, the functional coating can be designed to output an electrical signal depending on a detected pressure. Optionally, the electrical signal can be output in the form of an electrical voltage signal, which is optionally proportional to the detected pressure. Optionally, a control device can be provided in order to receive and optionally evaluate the signal provided by the pressure sensor. Optionally, the control device can be partly or completely integrated in a spectacle frame or spectacle frame dummy in which the spectacle lens dummy is arranged.

The pressure sensor can comprise at least two conductive layers and at least one insulator layer arranged between the two conductive layers. This can afford the possibility of detecting the applied pressure and generating a corresponding electrical signal. Optionally, the conductive layers together with the insulator layer situated between them can form a functional coating. Optionally, the functional coating can be configured in an identical or similar manner to a coating for providing an input possibility in the manner of a touchscreen display. In this case, the amplitude of the provided signal can be dependent on the magnitude of the applied contact pressure, such that the contact pressure can be detected quantitatively and optionally also with spatial resolution, that is to say location-sensitively.

In this case, the functional coating can be embodied as optically partly or completely transparent. This can afford the advantage that a cleanness or soiling of the spectacle lens and hence a degree of success of a cleaning process can be ascertained not only in reflection but also in transmission. This can afford the advantage that a degree of soiling can be determined in a view seen through the spectacle lens dummy.

Optionally, such a pressure sensor can be used not only in a spectacle lens dummy but also in smart lenses intended for regular use for spectacles which have a control device. In this case, the control device can optionally be arranged in and/or on the spectacle frame. Optionally, such spectacles with smart lenses can be configured to output an optical, acoustic and/or haptic signal to the user if a predetermined contact pressure on the spectacle lens is exceeded. This can optionally be embodied in a similar manner to toothbrushes which can output a signal when a predetermined contact pressure on teeth is exceeded.

The pressure sensor can be embodied as at least partly transparent. This can afford the advantage that instances of shading of the spectacle lens dummy by the pressure sensor can be avoided. This can afford the advantage that a degree of soiling of the spectacle lens dummy can also be ascertained in a see-through view.

The device can furthermore comprise a control device, which can be connected to the pressure sensor via an interface and can be configured to receive the information provided by the pressure sensor in the form of sensor data. This can afford the advantage that the information about the contact pressure detected by the sensor can be received and processed further in the form of electronic data.

The control device can furthermore be configured to ascertain, on the basis of the received sensor data, a spatial distribution of the contact pressure applied to the spectacle lens dummy and/or a temporal sequence of the contact pressure applied to the spectacle lens dummy. This can increase the added value of the information obtained. Optionally, this can afford the advantage that a pressure profile during a cleaning process can be reconstructed and accordingly the cleaning process can be characterized. This can enable the cleaning process to be improved and/or optimized with regard to the contact pressure and/or the movements performed.

The control device can be configured to provide a control signal for an output unit for outputting an evaluation of the detected contact pressure. This can serve to output information concerning the contact pressure to a user. Optionally, the output unit can comprise a display for presenting visual information and/or a loudspeaker for outputting acoustic information and/or a haptic actuator for outputting haptic information. In this case, the output unit can form a part of the device or can be embodied separately from the device. Optionally, the device can thus comprise the output unit. The output unit is designed to output a visual signal and/or an acoustic signal and/or a haptic signal to a user.

The control device can optionally comprise a processor and/or an electronic data memory. The control device can comprise a permanent memory and/or a volatile memory. Optionally, the control device can be embodied as a microcontroller and/or as an integrated circuit. Optionally, the control device can be configured as a personal computer, as a notebook, as a tablet computer, as a smartphone and/or as a mobile phone or can comprise such a device. In this case, the control device can be integrated in the device or can be embodied separately from the latter. Optionally, the control device can be connectable or connected to the pressure sensor by means of a cable connection and/or wirelessly. Optionally, a connection of the control device to the pressure sensor can be connectable by means of a commercially available communication standard, for instance by means of USB and/or RS232 and/or Ethernet and/or WLAN and/or Bluetooth and/or NFC and/or GSM.

Optionally, the device furthermore comprises a spectacle frame dummy, wherein the spectacle lens dummy is arranged in the spectacle frame dummy. This can afford the advantage that a cleaning process for the spectacle lens dummy can be effected as realistically as possible, that is to say that during the cleaning process for the spectacle lens dummy, a user encounters conditions for handling the spectacle lens dummy that are as similar as possible or identical to those typically encountered by the user when cleaning conventional spectacles. This can increase a value and/or meaningfulness of the information obtained with regard to applicability to cleaning processes for conventional spectacles.

Further details and advantages will now be explained in more detail on the basis of the following examples and optional embodiments with reference to the figures, in which:
- Figures 1A - 1C: show perspective illustrations of a device for determining a contact pressure during a cleaning process for a spectacle lens;
- Figure 2: shows a cleaning process;
- Figure 3: shows a spectacle lens dummy with pressure sensor in accordance with one optional embodiment;
- Figure 4: shows a spectacle lens dummy with pressure sensor in accordance with a further optional embodiment;
- Figure 5: shows a functional coating in accordance with one optional embodiment;
- Figure 6: shows a method for determining a contact pressure during a cleaning process for a spectacle lens in accordance with one optional embodiment.

The same or similar elements in the various embodiments are denoted by the same reference signs in the following figures for reasons of simplicity.

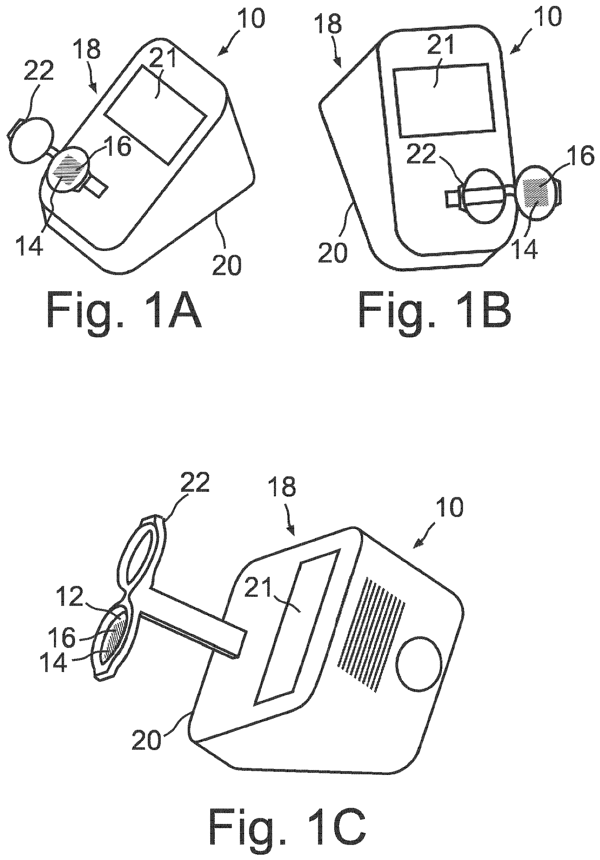

Figures 1A to 1C show schematic, perspective illustrations of a device 10 for determining a contact pressure during a cleaning process for a spectacle lens dummy in accordance with one optional embodiment. The device 10 comprises a spectacle lens dummy 12 and a pressure sensor 14 arranged on and/or in the spectacle lens dummy 12 and designed to detect a contact pressure applied to the spectacle lens dummy 12 during a cleaning process for the spectacle lens dummy 12 and to provide information depending on the detected contact pressure.

In this case, the pressure sensor 14 is embodied in areal fashion and occupies at least 25% and optionally at least 50% of the area of the spectacle lens dummy 12. The pressure sensor 14 can comprise or be embodied as a pressure measuring film 16. The pressure measuring film 16 can be designed to change colour reversibly or irreversibly upon pressure being applied.

The pressure sensor 14 can be embodied as at least partly transparent. Furthermore, the device 10 comprises a control device 18, which can be connected to the pressure sensor 14 via an interface and can be configured to receive the information provided by the pressure sensor 14 in the form of sensor data. In this case, the control device 18 can be accommodated in a housing 20.

The control device 18 can furthermore be configured to ascertain, on the basis of the received sensor data, a spatial distribution of the contact pressure applied to the spectacle lens dummy 12 and/or a temporal sequence of the contact pressure applied to the spectacle lens dummy 12.

In accordance with the embodiment shown, the device 10 additionally comprises an output unit 21, wherein the output unit 21 can be designed to output a visual signal and/or an acoustic signal and/or a haptic signal to a user. In accordance with the embodiment shown, the output unit 21 has a display for outputting visual information.

In this case, the control device 18 can be configured to provide a control signal for an output unit 21 for outputting an evaluation of the detected contact pressure.

Moreover, the device 10 comprises a spectacle frame dummy 22, wherein the spectacle lens dummy 12 is arranged in the spectacle frame dummy 22. In this case, a further spectacle lens dummy 12 can be arranged in the spectacle frame dummy 22, and can optionally be embodied with or without a pressure sensor 14. In this case, the spectacle frame dummy 22 can be secured to the device in a projecting manner, such that a user can grip the spectacle frame dummy 22 in order to carry out a cleaning method as in the case of a customary cleaning process for a spectacle lens in a spectacle frame.

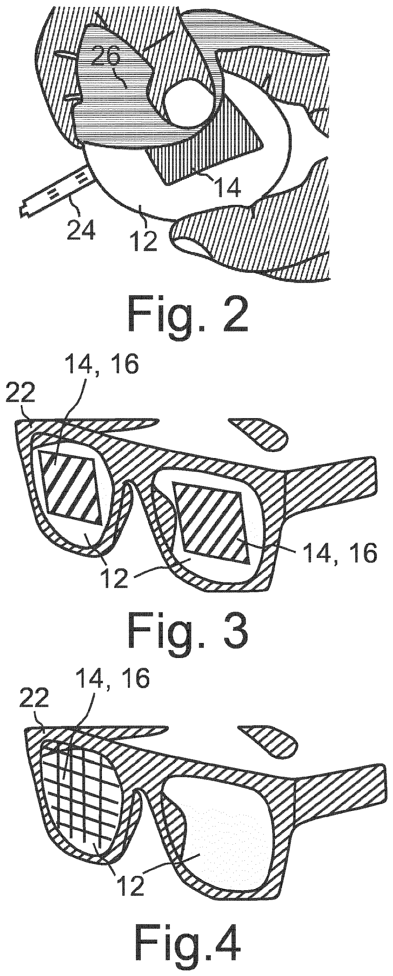

Figure 2 shows a schematic illustration of a cleaning process for a spectacle lens dummy 12, onto which a pressure sensor 14 embodied in areal fashion has been adhesively bonded. In this case, the pressure sensor 14 has a wired interface 24, by means of which the pressure sensor 14 is connectable to a control device 18 in order to provide the information detected by the pressure sensor 14. During the cleaning process, an aid 26, such as a cleaning cloth, for instance, can be pressed against the spectacle lens dummy 12 and moved over one or both optical surfaces of the spectacle lens dummy 12 in order to remove dirt from the optical surfaces of the spectacle lens dummy 12. The contact pressure applied to the spectacle lens dummy 12 in the process can be detected by the pressure sensor 14, such that the pressure sensor 14 can provide information depending on the detected contact pressure via the interface 24.

Figure 3 shows a schematic illustration of a spectacle frame dummy 22 with two inserted spectacle lens dummies 12, on each of which is arranged a pressure sensor 14 in the form of a pressure measuring film 16. In this case, the pressure measuring film 16 can shade those regions of the spectacle lens dummy 12 which are covered by the pressure measuring film 16. The pressure measuring film 16 can be configured in such a way that it changes colour reversibly or irreversibly upon contact pressure being applied.

Figure 4 shows a schematic illustration of a spectacle frame dummy 22 with two inserted spectacle lens dummies 12, wherein a pressure sensor 14 in the form of a pressure measuring film 14 has been moulded into one spectacle lens dummy 12. Said film can optionally be configured as a polarizer film which reversibly or irreversibly changes a polarization direction of light passing through and/or a transparency depending on an applied pressure.

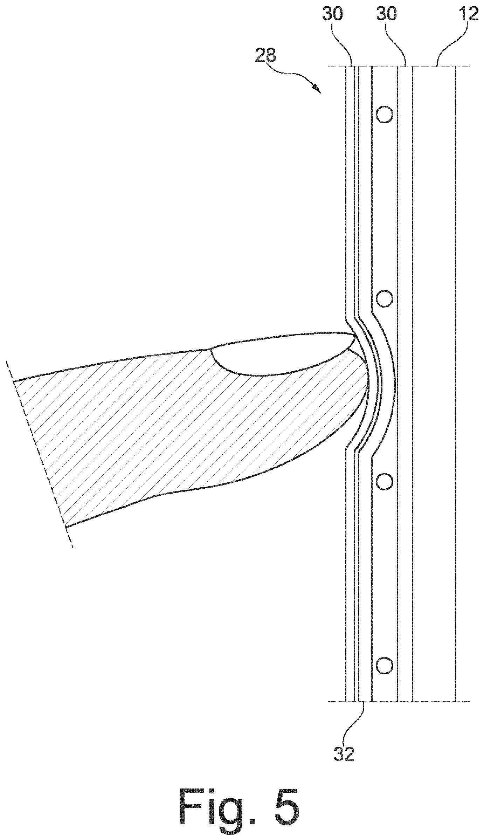

Figure 5 shows a schematic cross-sectional illustration of a pressure sensor 14 in accordance with one optional embodiment, which pressure sensor comprises or is embodied as a functional coating 28 arranged on the spectacle lens dummy 12. Said coating can generate a voltage signal depending on an applied contact pressure, as illustrated by way of example by a finger pressing onto the pressure sensor 14. In this case, the functional coating 28 can be configured as optically partly or completely transparent. The pressure sensor 14 optionally comprises at least two electrically conductive layers 30 and at least one insulator layer 32 arranged between the two conductive layers 30. The contact pressure can change a distance between the electrically conductive layers 30, as a result of which an electrical signal that depends on the contact pressure can arise.

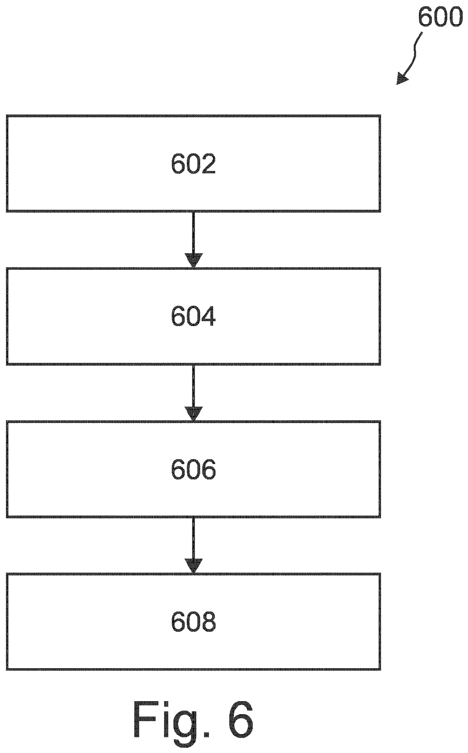

Figure 6 shows a schematic illustration of a method 600 for determining a contact pressure during a cleaning process for a spectacle lens.

The method 600 comprises, in a step 602, providing a spectacle lens dummy 12 having a pressure sensor 14 arranged on and/or in the spectacle lens dummy 12.

In a step 604, the method 600 comprises carrying out, by means of a user, a cleaning process for the spectacle lens dummy 12 by way of applying a contact pressure to the spectacle lens dummy 12.

In a step 606, the method 600 comprises detecting, by means of the pressure sensor 14, the contact pressure applied to the spectacle lens dummy 12 during the cleaning process for the spectacle lens dummy 12.

In a step 608, the method 600 comprises providing information depending on the detected contact pressure by means of the pressure sensor 14.

### List of reference signs

- 10: Device for determining a contact pressure during a cleaning process for a spectacle lens
- 12: Spectacle lens dummy
- 14: Pressure sensor
- 16: Pressure measuring film
- 18: Control device
- 20: Housing
- 21: Output unit
- 22: Spectacle frame dummy
- 24: Interface
- 26: Aid
- 28: Functional coating
- 30: Electrically conductive layer
- 32: Insulator layer

- 600: Method for determining a contact pressure during a cleaning process for a spectacle lens
- 602 - 608: Method steps

## Claims

1. Device (10) for determining a contact pressure during a cleaning process for a spectacle lens dummy (12),
**characterized in that** the device (10) comprises:
- the spectacle lens dummy (12); and
- a pressure sensor (14) arranged on and/or in the spectacle lens dummy (12) and designed to detect a contact pressure applied to the spectacle lens dummy (12) during a cleaning process for the spectacle lens dummy (12) and to provide information depending on the detected contact pressure.

2. Device (10) according to Claim 1, wherein the pressure sensor (14) is embodied in areal fashion and occupies at least 25% and optionally at least 50% of the area of the spectacle lens dummy (12).

3. Device (10) according to Claim 1 or 2, wherein the pressure sensor (14) comprises or is embodied as a pressure measuring film (16).

4. Device (10) according to Claim 3, wherein the pressure measuring film (16) is designed to change colour reversibly or irreversibly upon pressure being applied.

5. Device (10) according to any of the preceding claims, wherein the pressure sensor (14) comprises or is embodied as a functional coating (28) arranged on the spectacle lens dummy (12).

6. Device (10) according to any of the preceding claims, wherein the pressure sensor (14) comprises at least two electrically conductive layers (30) and at least one insulator layer (32) arranged between the two conductive layers (30).

7. Device (10) according to any of the preceding claims, wherein the pressure sensor (14) is embodied as at least partly transparent.

8. Device (10) according to any of the preceding claims, furthermore comprising a control device (18), which is connected to the pressure sensor (14) via an interface (24) and is configured to receive the information provided by the pressure sensor (14) in the form of sensor data.

9. Device (10) according to Claim 8, wherein the control device (18) is furthermore configured to ascertain, on the basis of the received sensor data, a spatial distribution of the contact pressure applied to the spectacle lens dummy (12) and/or a temporal sequence of the contact pressure applied to the spectacle lens dummy (12).

10. Device (10) according to Claim 8 or 9, wherein the control device (18) is configured to provide a control signal for an output unit (21) for outputting an evaluation of the detected contact pressure.

11. Device (10) according to Claim 10, furthermore comprising the output unit (21), wherein the output unit (21) is designed to output a visual signal and/or an acoustic signal and/or a haptic signal to a user.

12. Device (10) according to any of the preceding claims, furthermore comprising a spectacle frame dummy (22), wherein the spectacle lens dummy (12) is arranged in the spectacle frame dummy (22).

13. Method (600) for determining a contact pressure during a cleaning process for a spectacle lens dummy (12),
**characterized in that** the method (600) comprises:
- providing (602) the spectacle lens dummy (12) having a pressure sensor (14) arranged on and/or in the spectacle lens dummy (12);
- carrying out (604), by means of a user, a cleaning process for the spectacle lens dummy (12) by way of applying a contact pressure to the spectacle lens dummy (12);
- detecting (606), by means of the pressure sensor (14), the contact pressure applied to the spectacle lens dummy (12) during the cleaning process for the spectacle lens dummy (12); and
- providing (608) information depending on the detected contact pressure by means of the pressure sensor (14).

## Patentansprüche

1. Vorrichtung (10) zum Bestimmen eines Anpressdrucks während eines Reinigungsprozesses für eine Brillenglasattrappe (12),
**dadurch gekennzeichnet, dass** die Vorrichtung (10) Folgendes umfasst:
- die Brillenglasattrappe (12); und
- einen Drucksensor (14), der an und/oder in der Brillenglasattrappe (12) angeordnet ist und dazu ausgelegt ist, einen während eines Reinigungsvorgangs für die Brillenglasattrappe (12) auf die Brillenglasattrappe (12) ausgeübten Anpressdruck zu detektieren und in Abhängigkeit von dem detektierten Anpressdruck Informationen zu liefern.

2. Vorrichtung (10) nach Anspruch 1, wobei der Drucksensor (14) flächig ausgebildet ist und mindestens 25 % und gegebenenfalls mindestens 50 % des Flächeninhalts der Brillenglasattrappe (12) einnimmt.

3. Vorrichtung (10) nach Anspruch 1 oder 2, wobei der Drucksensor (14) eine Druckmessfolie (16) umfasst oder als diese ausgebildet ist.

4. Vorrichtung (10) nach Anspruch 3, wobei die Druckmessfolie (16) dazu ausgelegt ist, bei Druckbeaufschlagung die Farbe reversibel oder irreversibel zu verändern.

5. Vorrichtung (10) nach einem der vorhergehenden Ansprüche, wobei der Drucksensor (14) eine auf der Brillenglasattrappe (12) angeordnete Funktionsbeschichtung (28) umfasst oder als diese ausgebildet ist.

6. Vorrichtung (10) nach einem der vorhergehenden Ansprüche, wobei der Drucksensor (14) mindestens zwei elektrisch leitfähige Schichten (30) und mindestens eine Isolatorschicht (32), die zwischen den zwei leitfähigen Schichten (30) angeordnet ist, umfasst.

7. Vorrichtung (10) nach einem der vorhergehenden Ansprüche, wobei der Drucksensor (14) zumindest teilweise transparent ausgebildet ist.

8. Vorrichtung (10) nach einem der vorhergehenden Ansprüche, die ferner eine Steuervorrichtung (18) umfasst, die über eine Schnittstelle (24) mit dem Drucksensor (14) verbunden ist und dazu ausgelegt ist, die von dem Drucksensor (14) in Form von Sensordaten gelieferten Informationen zu empfangen.

9. Vorrichtung (10) nach Anspruch 8, wobei die Steuervorrichtung (18) ferner dazu ausgelegt ist, basierend auf den empfangenen Sensordaten eine räumliche Verteilung des auf die Brillenglasattrappe (12) ausgeübten Anpressdrucks und/oder einen zeitlichen Ablauf des auf die Brillenglasattrappe (12) ausgeübten Anpressdrucks zu ermitteln.

10. Vorrichtung (10) nach Anspruch 8 oder 9, wobei die Steuervorrichtung (18) dazu ausgelegt ist, ein Steuersignal für eine Ausgabeeinheit (21) zum Ausgeben einer Auswertung des detektierten Anpressdrucks bereitzustellen.

11. Vorrichtung (10) nach Anspruch 10, die ferner die Ausgabeeinheit (21) umfasst, wobei die Ausgabeeinheit (21) dazu ausgelegt ist, ein visuelles Signal und/oder ein akustisches Signal und/oder ein haptisches Signal an einen Benutzer auszugeben.

12. Vorrichtung (10) nach einem der vorhergehenden Ansprüche, die ferner eine Brillengestellattrappe (22) umfasst, wobei die Brillenglasattrappe (12) in der Brillengestellattrappe (22) angeordnet ist.

13. Verfahren (600) zum Bestimmen eines Anpressdrucks während eines Reinigungsvorgangs für eine Brillenglasattrappe (12),
**dadurch gekennzeichnet, dass** das Verfahren (600) Folgendes umfasst:
- Bereitstellen (602) der Brillenglasattrappe (12) mit einem Drucksensor (14), der an und/oder in der Brillenglasattrappe (12) angeordnet ist;
- Durchführen (604) eines Reinigungsvorgangs für die Brillenglasattrappe (12) durch Ausüben eines Anpressdrucks an die Brillenglasattrappe (12) durch einen Benutzer;
- Detektieren (606) des Anpressdrucks, der während des Reinigungsvorgangs für die Brillenglasattrappe (12) auf die Brillenglasattrappe (12) ausgeübt wird, mittels des Drucksensors (14); und
- Bereitstellen (608) von Informationen in Abhängigkeit von dem detektierten Anpressdruck mittels des Drucksensors (14).

## Revendications

1. Dispositif (10) de détermination d'une pression de contact lors pendant un processus de nettoyage pour un verre de lunettes de démo (12), **caractérisé en ce que** le dispositif (10) comprend :
- le verre de lunettes de démo (12) ; et
- un capteur de pression (14) agencé sur et/ou dans le verre de lunettes de démo (12) et conçu pour détecter une pression de contact appliquée sur le verre de lunettes de démo (12) pendant un processus de nettoyage pour le verre de lunettes de démo (12) et pour fournir des informations en fonction de la pression de contact détectée.

2. Dispositif (10) selon la revendication 1, dans lequel le capteur de pression (14) est réalisé en surface et occupe au moins 25 % et facultativement au moins 50 % de la surface du verre de lunettes de démo (12).

3. Dispositif (10) selon la revendication 1 ou la revendication 2, dans lequel le capteur de pression (14) comprend ou est réalisé en tant qu'un film de mesure de pression (16).

4. Dispositif (10) selon la revendication 3, dans lequel le film de mesure de pression (16) est conçu pour changer de couleur de manière réversible ou irréversible lors de l'application d'une pression.

5. Dispositif (10) selon l'une quelconque des revendications précédentes, dans lequel le capteur de pression (14) comprend ou est réalisé en tant qu'un revêtement fonctionnel (28) agencé sur le verre de lunettes de démo (12).

6. Dispositif (10) selon l'une quelconque des revendications précédentes, dans lequel le capteur de pression (14) comprend au moins deux couches électriquement conductrices (30) et au moins une couche d'isolant (32) agencée entre les deux couches conductrices (30).

7. Dispositif (10) selon l'une quelconque des revendications précédentes, dans lequel le capteur de pression (14) est réalisé en tant qu'au moins partiellement transparent.

8. Dispositif (10) selon l'une quelconque des revendications précédentes, comprenant en outre un dispositif de commande (18), qui est connecté au capteur de pression (14) par l'intermédiaire d'une interface (24) et est configuré pour recevoir les informations fournies par le capteur de pression (14) sous la forme de données de capteur.

9. Dispositif (10) selon la revendication 8, dans lequel le dispositif de commande (18) est en outre configuré pour s'assurer, sur la base des données de capteur reçues, d'une distribution spatiale de la pression de contact appliquée sur le verre de lunettes de démo (12) et/ou d'une séquence temporelle de la pression de contact appliquée sur le verre de lunettes de démo (12).

10. Dispositif (10) selon la revendication 8 ou la revendication 9, dans lequel le dispositif de commande (18) est configuré pour fournir un signal de commande pour une unité de sortie (21) afin de fournir en sortie une évaluation de la pression de contact détectée.

11. Dispositif (10) selon la revendication 10, comprenant en outre l'unité de sortie (21), l'unité de sortie (21) étant conçue pour fournir en sortie un signal visuel et/ou un signal sonore et/ou un signal haptique à un utilisateur.

12. Dispositif (10) selon l'une quelconque des revendications précédentes, comprenant en outre une monture de lunettes de démo (22), dans lequel le verre de lunettes de démo (12) est agencé dans la monture de lunettes de démo (22).

13. Procédé (600) de détermination d'une pression de contact pendant un processus de nettoyage pour un verre de lunettes de démo (12), **caractérisé en ce que** le procédé (600) comprend :
- la fourniture (602) du verre de lunettes de démo (12) ayant un capteur de pression (14) agencé sur et/ou dans le verre de lunettes de démo (12),
- la mise en œuvre (604), au moyen d'un utilisateur, d'un procédé de nettoyage pour le verre de lunettes de démo (12) par voie d'application d'une pression de contact sur le verre de lunettes de démo (12) ;
- la détection (606), au moyen du capteur de pression (14), de la pression de contact appliquée sur le verre de lunettes de démo (12) pendant le processus de nettoyage pour le verre de lunettes de démo (12) ; et
- la fourniture (608) d'informations en fonction de la pression de contact détectée au moyen du capteur de pression (14).
